# EUROPEAN PATENT APPLICATION

(11) **EP 0 953 854 A1**
(43) Date of publication of application: **03.11.1999**
(21) Application number: 98120667.5
(22) Date of filing: 04.11.1998
(51) Int. Cl.: G02B 6/34

(54) **Ring coupler for optical networks**

(30) Priority: 29.04.1998 US 69597
(71) Applicant: Hewlett-Packard Company, Palo Alto, California 94304 (US)
(72) Inventor: Baney, Douglas M., Los Altos, California 94024 (US)
(74) Representative: Liesegang, Roland, Dr.-Ing.

(57) **Abstract**

A cross-coupler[20, 100, 200] for connecting a first optical network running on a first optical channel[10] to a second optical network running on a second optical channel[12]. The optical couplers are inserted into the first and second optical channels at an insertion point in each of the optical channels. Broadly, the coupler includes a first interface[21] inserted into the first optical channel[10], a second interface[22] inserted into the second optical channel[12], and an optical connecting channel connecting the first and second interfaces for transferring light of a selected wavelength from the first optical channel[10] to the second optical channel[12]. The first and second interfaces preferably include variable frequency Bragg reflectors (VFBR) for reflecting light of a selected wavelength traveling in the optical channels. The selected wavelength is alterable by applying a selection signal to the first VFBR[24, 104]. In embodiments in which light signals are transferred both from the first optical channel[10] to the second optical channel[12] and vice versa, a second optical connecting channel[118] is utilized for transferring light between the second optical channel[12] and the first optical channel[10]. The device preferably utilizes optical circulators for interfacing the various light signals to, and from, the connecting channels. Embodiments in which fixed frequency Bragg reflectors are used in place of the VFBRs may also be constructed.

## Description

### Field of the Invention

The present invention relates to optical fiber based communication networks, and more particularly, to couplers for selectively transferring data between two such networks.

### Background of the Invention

Communication networks based on optical fibers for transferring data between terminals are attractive because of the high bandwidth of the optical fibers. Data is transmitted on these networks by modulating a light source, usually a laser. A plurality of users may share a single fiber either via time or frequency domain multiplexing. Frequency domain multiplexing is typically implemented by assigning a different wavelength to each user or channel.

A limited number of stations may be accommodated on any given fiber ring. Accordingly, a coupling device is needed to selectively couple data from a first fiber to a second fiber. The data to be coupled is typically isolated to a sub-set of the channels on the first fiber. In some cases, it is advantageous to simultaneously remove the transferred channel from the first fiber after the channel is connected to the second fiber.

Broadly, it is the object of the present invention to provide an improved coupler for selectively coupling light having a predetermined wavelength between first and second fibers.

It is a further object of the present invention to provide a coupler that can selectively remove light from the first fiber after the light has been coupled to the second fiber.

These and other objects of the present invention will become apparent to those skilled in the art from the following detailed description of the invention and the accompanying drawings.

### Summary of the Invention

The present invention is a cross-coupler for connecting a first optical network running on a first optical channel to a second optical network running on a second optical channel. The optical couplers are inserted into the first and second optical channels at an insertion point in each of the optical channels. Broadly, the coupler includes a first interface inserted into the first optical channel, a second interface inserted into the second optical channel, and an optical connecting channel connecting the first and second interfaces for transferring light of a selected wavelength from the first optical channel to the second optical channel. The first interface preferably includes a first variable frequency Bragg reflector (VFBR) for reflecting light of a selected wavelength traveling in the first optical channel into the optical connecting channel and for passing light of other wavelengths. The selected wavelength is alterable by applying a selection signal to the first VFBR. A first routing device included in the first interface couples light reflected by the first VFBR into the optical connecting channel. The first routing device is preferably an optical circulator. Light that is not reflected into the optical connecting channel is coupled into the first optical channel by a first coupling device. The second interface preferably includes a second VFBR for reflecting light of the selected wavelength in response to the receipt of the selection signal and a second routing device for coupling light in the optical connecting channel to the second VFBR. The second routing device also couples light reflected by the second VFBR into the second optical channel. A second coupling device couples light traveling in the second optical channel having a wavelength different from the selected wavelength to the second routing device. The second routing device is also preferably an optical circulator. In embodiments in which light signals are transferred both from the first optical channel to the second optical channel and vice versa, the first and second coupling devices are preferably optical circulators. In these bi-directional embodiments, a second connecting channel is utilized for transferring light between the second optical channel and the first optical channel. Embodiments in which the VFBRs are replaced by fixed frequency Bragg reflectors may also be constructed.

### Brief Description of the Drawings

Figure 1 is a symbolic representation of an optical circulator.
Figure 2 is a symbolic representation of a variable wavelength Bragg reflector.
Figure 3 is a block diagram of an embodiment of a cross-coupler according to the present invention.
Figure 4 is a block diagram of a bi-directional cross-coupler according to the present invention.
Figure 5 is a block diagram of a bi-directional cross-coupler according to the present invention that utilizes optical couplers in place of the optical circulators shown in Figure 4.

### Detailed Description of the Invention

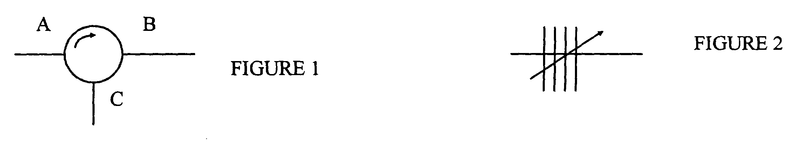

The present invention may be more easily understood in terms of two basic optical components. The first optical component is referred to as an optical circulator and is shown symbolically in Figure 1. Light entering any port of the optical circulator leaves the circulator by the next port encountered in the direction of the arrow. Hence, light entering port A will exit by port B. Light entering port B will exit by port C, and so on. Such devices may be purchased commercially, and hence, the detailed construction of optical circulators will not be discussed in detail here.

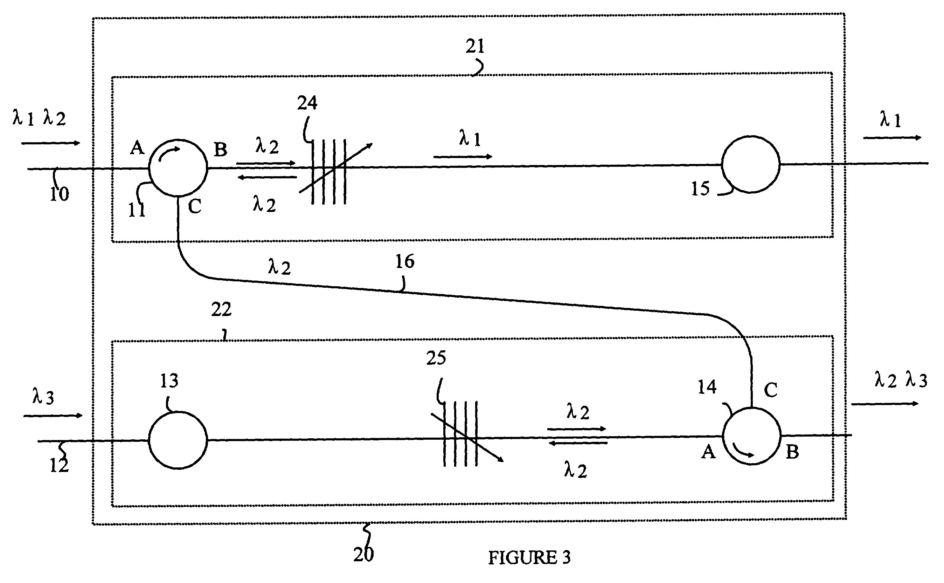

The second optical component is a variable wavelength fiber Bragg reflector (VFBR) which is shown symbolically in Figure 2. Since fiber Bragg reflectors are well known to the art, they will not be discussed in detail here. For the purpose of the present discussion, it is sufficient to note that a Bragg reflector may be viewed as a grating that has been induced in the core of an optical fiber. The grating consists of periodic alterations in the index of refraction of the core of the fiber. Such alterations may be induced by illuminating the core with a UV light pattern having regularly spaced maxima of sufficient intensity to damage the core. The pattern is typically generated by the interference of two UV light beams.

When light having a wavelength twice the spacing of the grating strikes the grating, the light is reflected because of the coherent interference of the various partial reflections created by the alterations in the index of refraction of the fiber core. The wavelength at which the reflection occurs may be varied by varying the optical path length between the periodic alterations in the index of refraction. This may be accomplished by heating the fiber or by stretching the fiber. The input signal used to activate the heating or stretching system is not shown in the figures to simplify the figures; however, it is to be understood that each VFBR includes a signal input and the appropriate hardware for altering the reflection wavelength.

In a typical wavelength division multiplexed (WDM) optical network, the channels have closely spaced wavelengths. The spacing between any two channels is sufficient to provide channel isolation. However, the total wavelength range across all of the channels is preferably kept to a minimum to allow a single optical amplifier to be used to maintain the signal strength in the network at each amplification station.

In general, the degree of variation in the reflection wavelength of the VFBR is sufficient to move the reflection wavelength from a value between two channels to a value on one of the adjacent channels. Hence, the light in a single channel can be selectively reflected by heating or stretching a corresponding VFBR to move its reflection wavelength from a value between two channels to the channel value. When the wavelength is set between the two channels, no reflections occur, since there is no light at that wavelength.

The manner in which a coupler according to the present invention operates may be more easily understood with reference to Figure 3. Figure 3 is a block diagram of a cross-coupler 20 according to the present invention for transferring signals from a first optical network operating on an optical channel 10 to a second optical network operating on an optical channel 12. For simplicity, it will be assumed that optical channels 10 and 12 are optical fibers; however, it will be apparent to those skilled in the art that other forms of optical transmission may be utilized. For the purpose of the present discussion, it will be assumed that light signals transmitted on wavelengths λ₁ and λ₂ enter cross-coupler 20 on optical channel 10. The signals transmitted on λ₂ are to be transferred to optical channel 12 and eliminated from optical channel 10. It will also be assumed for the purposes of this example that optical channel 12 currently has signals transmitted on λ₃ which is different from λ₂.

Cross-coupler 20 may be viewed as being constructed from a first interface 21 that is inserted into optical channel 10 and a second interface 22 that is inserted into optical channel 12. Interface 21 includes an optical circulator 11 and a VFBR 24. Light that is not reflected by VFBR 24 is injected back into optical channel 10 by a coupler 15 which, for the purposes of this example, may be a splice in the optical fiber. When light having a wavelength of λ₂ is to be directed to optical channel 12, VFBR 24 is set to reflect light of wavelength λ₂. This causes the light having a wavelength of λ₂ to be reflected back into circulator 11, where it exits through port C on an optical connecting channel 16. Light of wavelength λ₁ is not reflected by VFBR 24 and is coupled back into optical channel 10 by coupler 15.

The control of VFBR 24 is provided by a signal to a device included in VFBR 24 which shifts its reflection wavelength from a "parked wavelength" that does not match either λ₁ or λ₂ to λ₂. When optical channel 10 is configured to allow light of both λ₁ and λ₂ to pass, VFBR 24 is adjusted to the parked wavelength. Since no light is present at the parked wavelength, VFBR 24 does not alter the operation of the network on optical channel 10 in this configuration.

The light present on connecting channel 16 is integrated into the signals on an optical channel in an analogous manner by interface 22. Light on connecting channel 16 enters a port of optical circulator 14 and exits through port A of circulator 14. Another VFBR shown at 25 is set to reflect light of λ₂. Hence, the light is reflected back to port A of circulator 14 and exits via port B onto optical channel 12. Light already present on optical channel 12 is coupled into interface 12 via a coupler 13 which can be viewed as a splice in the optical fiber for the purposes of this discussion. Since VFBR 25 reflects only light of λ₂, the light at λ₃ is not altered. This light enters circulator 14 and exits back onto optical channel 12.

When the networks are not coupled, VFBR 25 is also parked at a wavelength at which no light is transmitted in optical channel 12. Hence, VFBR 25 is effective only in the optical circuit when it is activated by a selection signal that causes it to shift its reflection wavelength to λ₂.

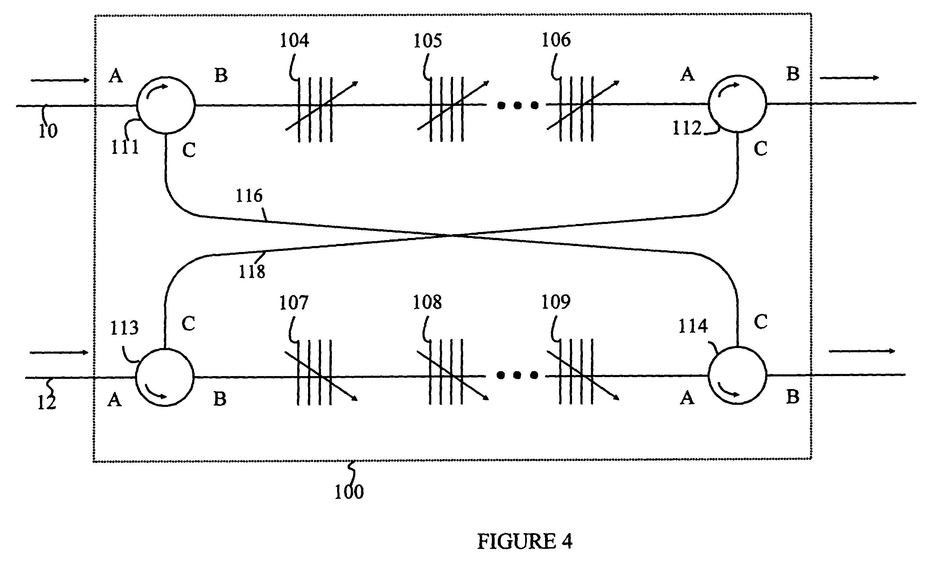

Refer now to Figure 4, which is a block diagram of another embodiment of a cross-coupler 100 according to the present invention. Coupler 100 connects networks 10 and 12. Cross-coupler 100 differs from cross-coupler 20 discussed above in that it can couple light from optical channel 10 to optical channel 12, and vice versa. Cross-coupler 100 can also cross-connect any of a plurality of wavelengths. It should be noted that the couplers shown at 13 and 15 in Figure 3 have been replaced by optical circulators 113 and 112. Circulators 111 and 114 serve functions analogous to circulators 11 and 14 shown in Figure 3. In addition, a second cross-channel 118 has been introduced to allow signals from optical channel 12 to move to optical channel 10.

It is assumed that each of the optical networks supports traffic at a plurality of wavelengths. Each channel in a network corresponds to a narrow band of wavelengths. Guard bands separate the individual channels. Each interface includes a plurality of VFBRs. There is one such reflector in each interface corresponding to each channel that is a candidate for transfer from one network to the other. Exemplary VFBRs are shown at 104-109. The VFBRs operate in pairs, one in each interface. When a channel is not connected between the networks, the corresponding VFBRs are "parked" at a frequency in a neighboring guard band. To connect a channel between the two networks, the corresponding VFBRs in the two interfaces are moved to the frequency of that channel.

It should be noted that the present invention can also provide a transfer of signals without dropping the channel from the network in which it originates. If the light signal is not to be dropped, then the corresponding VFBR needs to be only partially reflecting. The degree of reflection of a Bragg reflector is determined by the strength of the variations in the index of refraction have been introduced into the fiber. Accordingly, a VFBR, which only reflects half the light incident thereon, can be constructed. In this case, the remaining half of the signal at that wavelength will continue to circulate in network.

It should also be noted that two separate VFBRs may be provided for each wavelength in some embodiments of the present invention. One for completely reflecting the light signal and the other for only partially reflecting the signal. Hence, the choice of whether or not the signal is to be dropped at the same time it is transferred can be made by selecting the appropriate VFBR.

Cross-coupler 100 can also be used to transfer a signal from network 12 to network 10 in a manner analogous to that described above. Network 12 also includes two circulators shown at 113 and 114 and a plurality of VFBRs such as those shown at 107-109. To transfer light of wavelength λ₁ from network 12 to network 10, the VFBRs in each network corresponding to the channel at λ₁ are set to reflect light of this wavelength. The light entering circulator 113 via port A exits via port B and is reflected back into port B. The light then exits via port C of circulator 113 and enters circulator 112 in network 10. The light exits circulator 112 via port A thereof and is reflected back into port A and exits via port B.

While the above-described embodiment of the present invention utilized circulators, embodiments utilizing conventional optical couplers may also be constructed. For the purposes of this discussion, an optical coupler is defined to be a device for coupling two optical fibers such that a portion of a light signal traveling in a first fiber is transferred to the second fiber. The resulting light signal in the second fiber travels in a direction determined by the direction of travel of the light in the first fiber.

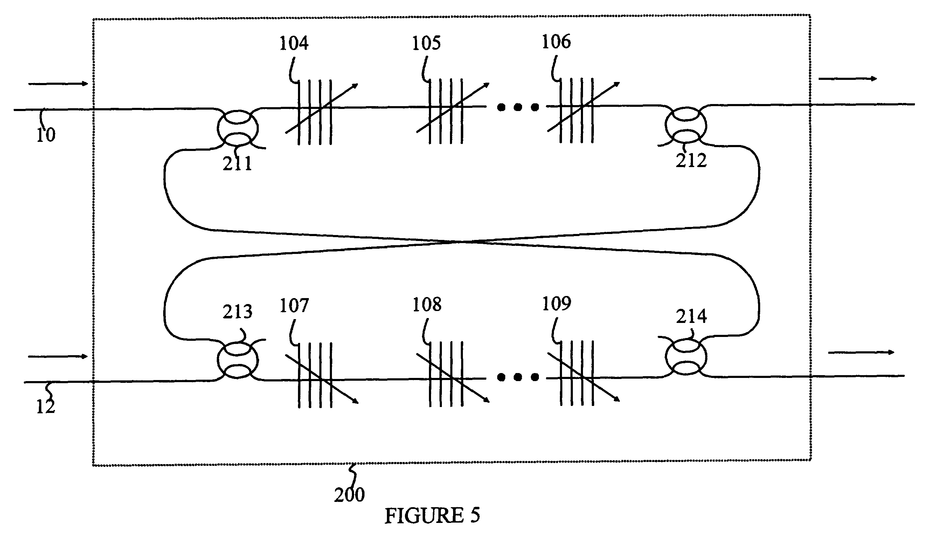

Refer now to Figure 5, which is a schematic drawing of a cross-coupler 200 according to the present invention. Cross-coupler 200 differs from cross-coupler 100 discussed above in that circulators 111-114 have been replaced by optical couplers 211-214. Again consider a signal at wavelength λ₁ which is to be transferred from network 10 to network 12. A VFBR in network 10 is set to reflect light of wavelength λ₁ as described above. The signal enters coupler 211 and is reflected by the VFBR in network 10, which has been set to λ₁. The reflected signal re-enters coupler 211 and a portion of the light is transferred to coupler 214 in network 12. The remainder of the light continues in network 10, but in the opposite direction to the normal flow of signals in network 10. It is assumed that the devices in network 10 do not "see" signals traveling in the wrong direction or that an optical isolator is present in network 10, which eliminates such signals.

The portion of the light transferred to network 12 enters via coupler 214. At this point, the signal is traveling in the proper direction in network 12 and is merged with the other signals in network 12. Transfers of light signals from network 12 to network 10 are handled in an analogous manner.

Optical couplers are less expensive than circulators. However, such couplers reduce the signal strength of all of the signals passing therethrough, and hence, this embodiment of the present invention may not be practical in networks which have a number of couplers and lack compensating amplifiers. It should be noted that a circulator is functionally equivalent to an optical coupler in series with an isolator which blocks light from traveling in one direction.

The embodiment shown in Figure 5 replaced all of the circulators shown in Figure 4 with optical couplers. However, it will be obvious to those skilled in the art from the preceding discussion that embodiments in which only a portion of the circulators are replaced can also be constructed without deviating from the teachings of the present invention.

The above-described embodiments of the present invention have utilized optical fibers for transmitting the light signals. However, it will be apparent to those skilled in the art that the teachings of the present invention may be utilized with any form of waveguide.

The above embodiments of the present invention assume that the wavelength of the light signal to be coupled between the two networks is the same as the wavelength of one or more of the channels in each network. Hence, a VFBR is utilized to selectively pick out the signal to be transferred. It should be noted, however, that embodiments in which the light signal to be coupled from the first network to the second network is generated at a frequency that is not normally used in the first network can also be constructed. In such a system, a conventional fixed wavelength Bragg reflector can be used to intercept the signal. A device wishing to send a message into the second network generates the signal at a predetermined transfer wavelength, winch does not correspond, to any of the channel wavelengths in the first network. The wavelength of the Bragg reflector can be fixed because signals of the transfer wavelength do not normally travel in the first network; hence, the fixed wavelength reflector will not interfere with other signals in the first network.

Various modifications to the present invention will become apparent to those skilled in the art from the foregoing description and accompanying drawings. Accordingly, the present invention is to be limited solely by the scope of the following claims.

## Claims

1. A cross-coupler[20, 100, 200] for connecting a first optical network comprising a first optical channel[10] to a second optical network comprising a second optical channel[12], said cross-coupler[20, 100, 200] being inserted into said first and second optical channels at an insertion point in each of said optical channels, said cross-coupler[20, 100, 200] comprising: a first interface[21] inserted into said first optical channel[10]; a second interface[22] inserted into said second optical channel[12]; and a first optical connecting channel[16,116] connecting said first and second interfaces for transferring light from said first optical channel[10] to said second optical channel[12], wherein said first interface[21] comprises: a first Bragg reflector[24, 104] for reflecting light of a selected wavelength traveling in said first optical channel[10] into said first optical connecting channel[16,116] and for passing light of other wavelengths; and a first routing device[11,111,211] for coupling light reflected by said first Bragg reflector[24, 104] into said first optical connecting channel[16,116].

2. The cross-coupler[20, 100, 200] of Claim 1 wherein said first Bragg reflector[24, 104] comprises a first variable frequency Bragg reflector[24, 104] (VFBR) having a reflection wavelength selectable by applying a selection signal to said first VFBR[24, 104].

3. The cross-coupler[20, 100, 200] of Claim 2 wherein said first and second optical channels comprise optical fibers.

4. The cross-coupler[20, 100, 200] of Claim 2 wherein said first routing device[11,111,211] comprises a first optical circulator, said first optical circulator comprising first, second, and third ports, light entering said first port exiting via said second port, and light entering said second port exiting via said third port, wherein said first port of said first optical circulator receives light from said first optical channel[10] at said point of insertion of said first interface[21], said first VFBR[24, 104] being connected to said second port and said first optical connecting channel[16,116] being connected to said third port of said first optical circulator.

5. The cross-coupler[20, 100, 200] of Claim 2 wherein said first interface[21] further comprises a first coupling device[15, 112, 212] for coupling light not reflected by said first VFBR[24, 104] into said first optical connecting channel[16,116] into said first optical channel[10] at said point of insertion of said first interface[21].

6. The cross-coupler[20, 100, 200] of Claim 5 wherein said coupling device is an optical coupler[212].

7. The cross-coupler[20, 100, 200] of Claim 5 wherein said second interface[22] comprises: a second Bragg reflector[25, 107] for reflecting light of said selected wavelength; a second routing device, coupling light in said first optical connecting channel[16,116] to said second Bragg reflector[25, 107], for coupling light reflected by said second Bragg reflector[25, 107] into said second optical channel[12]; and a second coupling device for coupling light traveling in said second optical channel[12] to said second routing device.

8. The cross-coupler[20, 100, 200] of Claim 7 wherein said second Bragg reflector comprises a second VFBR[25, 107] having a reflection wavelength selectable by said selection signal.

9. The cross-coupler[20, 100, 200] of Claim 8 wherein said second routing device comprises a second optical circulator for receiving light signals in said first optical connecting channel[16,116], said second optical circulator having first, second, and third ports, light entering said first port exiting via said second port, light entering said second port, exiting via said third port and light entering said third port exiting via said first port, wherein said first port is coupled to said second optical channel[12] so as to transmit light into said second optical channel[12], said second port is connected to said first optical connecting channel[16,116] so as to receive light therefrom, and said third port is connected to said second VFBR[25, 107].

10. The cross-coupler[20, 100, 200] of Claim 9 wherein said first and second coupling devices comprise optical circulators connected by a second optical connecting channel[118] for coupling light from said second optical channel[12] to said first optical channel[10].

11. The cross-coupler[20, 100, 200] of Claim 9 wherein said first and second routing devices comprise optical couplers[211, 214].

12. The cross-coupler[20, 100, 200] of Claim 5 wherein said second interface comprises a second routing device[114, 214], coupling light in said first optical connecting channel[116] into said second optical channel[12].

13. The cross-coupler[20, 100, 200] of Claim 12 wherein said second routing device comprises an optical coupler[214].
